# EUROPÄISCHE PATENTSCHRIFT

(11) **EP 1 402 480 B1**
(45) Veröffentlichungstag und Bekanntmachung des Hinweises auf die Patenterteilung: **10.08.2011**
(21) Anmeldenummer: 02748574.7
(22) Anmeldetag: 07.06.2002
(51) Int. Cl.: G07C 7/00

(54) **MITTEL ZUM VERBINDEN EINER FRONTBLENDE EINES QUADERFÖRMIGEN EINBAUGERÄTES MIT DESSEN EINBAUGEHÄUSETEIL**
MEANS FOR CONNECTING A FRONT PANEL OF A PARALLELEPIPEDAL BUILT-IN UNIT TO THE BUILT-IN HOUSING OF THE LATTER
MOYEN PERMETTANT DE RELIER UN PANNEAU AVANT D'UN APPAREIL PARALLELEPIPEDIQUE A ENCASTRER AU LOGEMENT A ENCASTRER LUI CORRESPONDANT

(30) Priorität: 30.06.2001 DE 20110888 U
(43) Veröffentlichungstag der Anmeldung: 31.03.2004
(73) Patentinhaber: Continental Automotive GmbH, 30165 Hannover (DE)
(72) Erfinder: KIRNER, Herbert, 78052 Villingen-Schwenningen (DE); PAUCKER, Jürgen, 78048 Villingen-Schwenningen (DE)
(86) Internationale Anmeldenummer: PCT/DE2002/002083
(87) Internationale Veröffentlichungsnummer: WO 2003/005781

(56) Entgegenhaltungen:
- EP-A- 0 333 579
- EP-A- 0 984 674
- EP-A- 1 045 628
- DE-A1- 2 547 648
- FR-A- 1 506 504
- FR-A- 2 675 746
- US-A- 4 699 341
- US-A- 4 829 595
- US-A- 5 423 605

## Beschreibung

Die Erfindung betrifft Mittel zum Verbinden einer Frontblende eines quaderförmigen Einbaugerätes mit dessen Einbaugehäuseteil, wobei die Frontblende einer Schmalseite des Einbaugehäuseteils zugeordnet ist.

Handelt es sich bei dem vorstehend genannten Einbaugerät um einen in einem Kraftfahrzeug verwendeten Fahrtschreiber, so hat dessen Frontblende nicht nur ästhetischen Forderungen zu entsprechen, sondern sie stellt auch ein Funktionsteil dar, in welchem beispielweise ein Fensterausschnitt für ein Display, Tastenschächte und den Datenkarten von Fahrer und Beifahrer zugeordnete Führungsschlitze gegebenenfalls auch einen Ausgabeschlitz für einen Druckbeleg ausgebildet sind.

Die Verbindungsmittel zwischen der Frontblende und dem Einbaugehäuseteil eines derartigen Fahrtschreibers müssen daher eine hohe Zuordnungsgenauigkeit zu den in dem Einbaugehäuseteil angeordneten Baugruppen, d.h. dem Display, diversen Tasten, einem Druckwerk und den Datenkartenaggregaten ermöglichen und Lageänderungen durch Materialermüdung aufgrund der beim Betrieb eines Kraftfahrzeuges zwangsweise gegebenen Erschütterungen sowie der am Einbauort herrschenden Temperaturschwankungen vermeiden. Auf der anderen Seite sind die Aufzeichnungen von Fahrtschreibern, insbesondere die Aufzeichnungen, die die Arbeits- und Ruhezeiten betreffen, manipulationsgefährdet, so dass dafür Sorge getragen werden muss, dass ein im nachhinein nicht mehr feststellbarer Eingriff, beispielweise durch einen Spalt zwischen Frontblende und Einbaugehäuseteil, zuverlässig verhindert ist.

Übliche durch Plomben gesicherte Schraubverbindungen können, abgesehen davon, dass sie für die Großserie aufgrund des Bauteile und Montageaufwandes nicht geeignet sind, diesen Bedingungen u.a. auch deshalb nicht gerecht werden, weil für das frontseitige Anbringe mehrerer Schraubverbindungen der hierzu erforderliche Bauraum fehlt und erfahrungsgemäß die die Schrauben sichernden Plombenkappen keine zuverlässige Plombierfunktion ausüben. Demgegenüber benötigen an der Frontblende angeformte Haken oder Krallen, um für eine rastende Verbindung der Frontblende mit dem Einbaugehäusetell ausreichend federungsfähig zu sein, eine gewisse Länge und Freiraum. Abgesehen von der Bruchgefahr solcher Verbindungsmittel ist diese Befestigungsart toleranzkritisch, so dass eine Frontblende u. U. nicht montierbar ist oder sich, gegebenenfalls erst mit der Zeit aufgrund von Erschütterungen und extremer Temperaturwechsel, eine labile nicht mehr spielfreie Verbindung einstellt.

Aus US 4 829 595 A ist eine elektronische Fahrzeugvorrichtung mit einem Gehäuse und einer Bedienungsplatte bekannt. Zusätzlich sind ein erstes Rahmenelement und ein zweites Rahmenelement vorgesehen. Ein oberer Teil des Gehäuse weist Vorsprünge auf, welche Vorsprünge parallel zu jeweiligen Gehäusewandungen ausgerichtet sind. Die Vorsprünge können in Ausnehmungen und Nuten des ersten Rahmenelemente eingreifen.

Die der vorliegenden Erfindung zugrunde liegend Aufgabe bestand somit darin, Mittel vorzusehen, die eine seriengerechte Montage der Frontblende eines quaderförmigen Fahrtschreibers mit dessen Einbaugehäuseteil gestatten, die in dem Einsatzmilieu in Kraftfahrzeug eine gleichbleibende Funktion, insbesondere im Hinblick auf Eingriffssicherheit, gewährleisten und die auf einfache Weise herstellbar sind.

Die Lösung dieser Aufgabe sieht Mittel gemäß den Merkmalen des unabhängigen Anspruchs 1 vor.

Weitere vorteilhafte Ausbildungen der Erfindung beschreiben die abhängigen Ansprüche.

Die erfindungsgemäße Lösung bietet den Vorzug einer schnell montierbaren und einen dauerhaften Sitz der Frontblende auf dem Einbaugehäuseteil gewährleistenden Einwegschnappverbindung, bei der vorzugsweise die gesamte Frontblende in die erforderliche elastische Verformung einbezogen ist, wobei die vorgesehenen relativ langen Aufgleitflächen ein Spreizen des Rahmens bei der Montage der Frontblende ermöglichen. Eine Demontage der Frontblende ist beschädigungs- bzw. zerstörungsfrei nur mittels eines speziellen Werkzeugs möglich, so dass die erfindungsgemäße Verbindung auch eine Plombierfunktion ausübt, und zwar ohne dass zusätzliche Bauteile erforderlich sind. Anderseits ist Eingriffsicherheit deshalb gegeben, weil der Rahmen die Verbindungsmittel relativ weit überdeckt und von außen nicht erkennbar ist, wo an der Innenseite des Rahmens sich die Verbindungsmittel, d.h. die Zungen/ Lappen und die den Zungen/ Lappen zugeordneten Nute befinden. Es ist ferner festzuthalten, dass die erfindungsgemäße Verbindung im montierten Zustand weitgehend kräftefrei ist und somit für die vorzugsweise aus Kunststoff hergestellte Frontblende Formstabilität gewährleistet.

Im folgenden sei die Erfindung anhand von Zeichnungen näher erläutert.

Es zeigen:
- **Figur 1**: eine Frontansicht eines Fahrtschreibers,
- **Figur 2**: eine vergrößerte Teildarstellung einer Seitenansicht des Fahrschreibers gemäß Figur 1,
- **Figur 3**: eine perspektivische Darstellung des Einbaugehäuseteils des erfindungsgemäßen Fahrtschreibers,
- **Figur 4**: einen Teilschnitt gemäß der Schnittlinie A in Figur 1 bei herausgenommener Druckerschubtade.

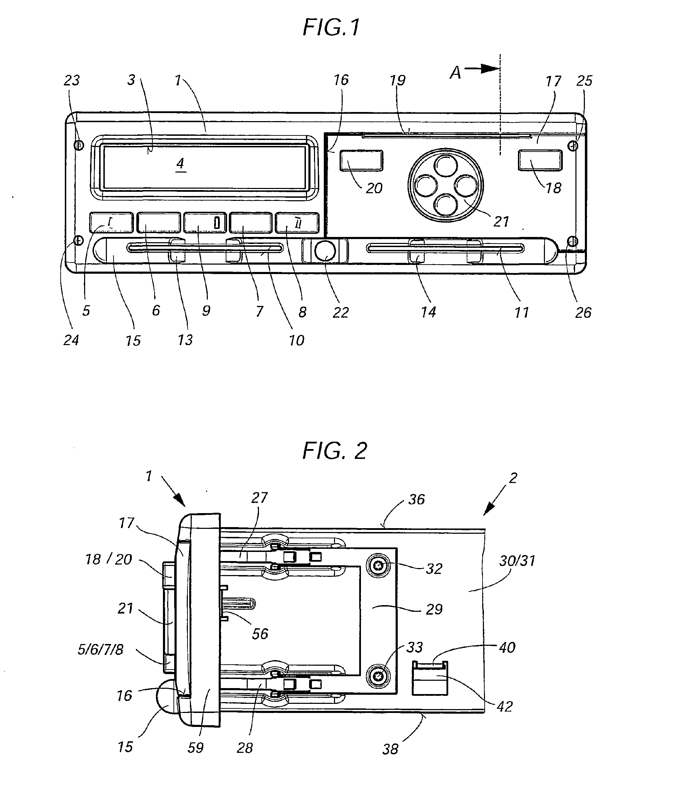

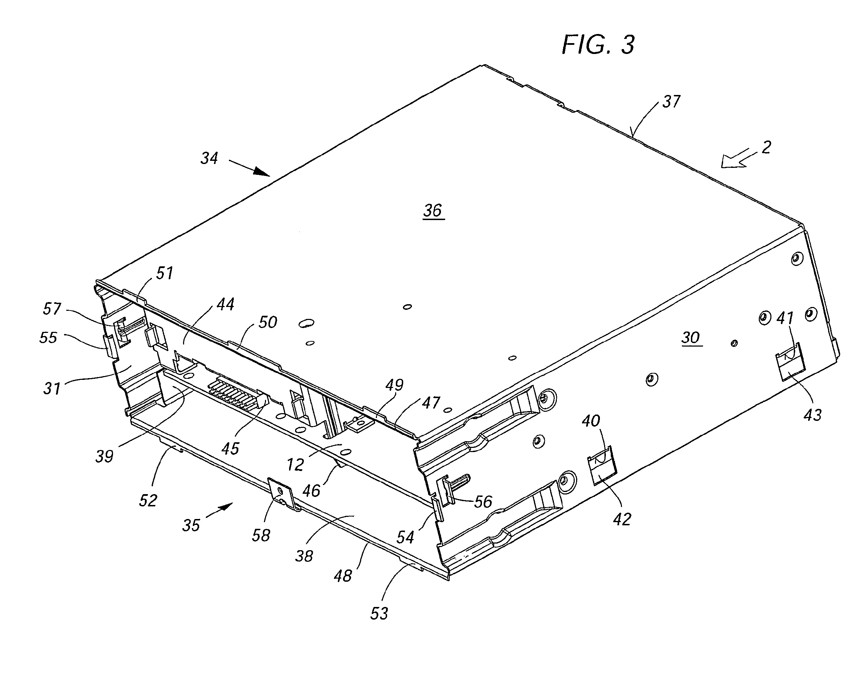

In der Figur 1 ist mit 1 eine Frontblende bezeichnet, welche ein Einbaugehäuseteil 2 (Figuren 2,3) eines Fahrtschreibers frontseitig abschließt. Mit 3 ist ein Fensterausschnitt bezeichnet, durch welchen die Anzeige eines Displays 4 lesbar ist. Ferner sind mehrere Tasten 5, 6, 7 und 8 in der Frontblende 1 geführt. Dabei dienen die Tasten 5 und 8 dem Anmelden von Fahrer und Beifahrer, die Tasten 6 und 7 dem Freigeben der jeweiligen, Fahrer und Beifahrer zugeordneten Datenkarten. Mit einer Abdeckung 9 ist eine Diagnosezwecken dienende Steckerfassung verschlossen. Trichterförmig angesenkte Führungsschlitze 10 und 11 dienen dem Eingeben der Datenkarten der Fahrer in die jeweiligen, im Einbaugehäuseteil 2 befindlichen, vorzugsweise einer Leitplatte 12 (Figur 3) zugeordneten Lese-/ Schreibaggregate des Fahrtschreibers. Freisparungen 13 und 14 des wulstförmigen Vorsprungs 15 der Frontblende 1 dienen dem Zugriff beim Entnehmen einer Datenkarte. In der Frontblende 1 ist ferner eine Aussparung 16 vorgesehen, welche von einer Frontwand 17 einer einer Druckvorrichtung zugeordneten Schublade abgedeckt ist, und zwar derart, dass sich die Frontwand 13 gestalterisch insbesondere flächenbündig, in die Frontfläche der Frontblende 1 einfügt.

Lediglich der Vollständigkeit halber sei erwähnt, dass der Schublade Verriegelungsmittel zugeordnet sind, welche, im Falle dass Aufzeichnungsmaterial nachgefüllt werden soll, durch Bestätigen einer Taste 18 entriegelt werden können. Mit 19 ist eine Auslassöffnung für das bedruckte Aufzeichnungsmaterial bezeichnet. Eine Taste 20 dient der Druckauslösung. Mittels eines ebenfalls in der Schublade angeordneten Wippenschalters 21 lassen sich verschiedene Funktionen und Datenspeicher anwählen und beispielweise im Zusammenspiel mit den Tasten 5 und 8 die Arbeitszeitdaten von Fahrer und Beifahrer abfragen. 22 bezeichnet eine einer Schraube, welche die Frontblende 1 mit dem Einbaugehäuseteil 2 verbindet, zugeordnete Plombenkappe. Paarweise vorgesehene Öffnungen 23, 24 und 25,26 dienen dem Einführen von bügelförmigen Werkzeugen beim Ausbau eines Fahrtschreibers aus einem Einbaufach bzw. einer geeigneten Öffnung in einem Armaturenbrett. Dabei wirken die Schenkel der Bügel, wie aus der Figur 2 hervorgeht, mit federnden Krallen 27 und 28 zusammen, welche an u-förmigen Bauteilen 29 ausgebildet sind, die ihrerseits an den Seitenwänden 30 und 31 des Einbaugehäuseteils 2 mittels Schrauben 32 und 33 befestigt sind.

Das gemäß Figur 3 nur zum Teil bestückte Einbaugehäuseteil 2 besteht aus einem Deckelteil 34 und einem Bodenteil 35. Das Deckelteil 34 weist eine Deckelplatte 36 auf, an welcher die Seitenwände 30, 31 und eine Rückwand 37 angeformt sind. Das Bodenteil 35 wird von einer Bodenplatte 38 und von an der Bodenplatte 38 angeformten, den Seitenwänden 30, 31 und der Rückwand 37 des Deckelteils 34 überlappend zugeordneten Schenkeln, von denen einer mit 39 bezeichnet ist, gebildet. Aus den Seitenwänden herausgebogene Lappen 40 und 41 sowie an den Schenkeln angeformte Riegel 42 und 43 dienen einem bajonettartigen Zusammenfügen von Deckelteil 34 und Bodenteil 35. Außerdem bilden die Lappen 40, 41 Podeste, die dem Befestigen der Leiterplatte 12 dienen. Dem Einbaugehäuseteil 2 ist ferner ein Strukturteil 44 zugeordnet, welches einerseits der Versteifung dient, indem es mit einer Seitenwand 31 der Rückwand 37, der Bodenplatte 38, der Deckelplatte 36 und der Leiterplatte 12 verbunden ist, anderseits eine Halterung für das Display 4 bzw. für eine Displaybaugruppe, welche das Display 4, eine dem Display 4 zugeordnete Leiterplatte sowie die Tasten 5, 6, 7, und 8 umfasst, bildet und an welchem eine der Schublade der Druckvorrichtung zugeordnete Führungsschiene angeformt ist. Die zweite Führungsschiene der Schublade ist an der Seitenwand 30 befestigt. Mit 45 ist eine Steckerleiste bezeichnet, die der symbolischen Darstellung der Zuordnung der Displaybaugruppe zur Leiterplatte 12 dient. 46 stellt eine an dem Strukturteil 44 ausgebildete, durch die Leiterplatte 12 durchgreifende und mit der Bodenplatte 38 zusammenwirkende Stütze dar.

Wie aus der Figur 3 ferner ersichtlich ist sind, an den der Frontblende 1 zugewandten Stirnseiten der Deckel- und der Bodenplatte 36, 38 der Versteifung dienende Leisten 47 und 48 mit daran ausgebildeten Zungen 49, 50, 51 und 52, 53 angeformt. Vorzugsweise in der gleichen Ebene wie die Zungen 49, 50, 51, 52, 53 liegen an den Seitenwänden 30, 31 des Deckelteils 34 stirnseitig angebogene Lappen 54 und 55. Zwei aus den Seitenwänden 30, 31 herausgeformte Winkel 56, 57 dienen beim Einbau des Fahrtschreibers als Anschläge. Eine an der Bodenplatte 38 angeformte und mit 58 bezeichnete Fahne dient dem Anbringen der bereits erwähnten mit der Plombenkappe 22 gesicherten Schraube.

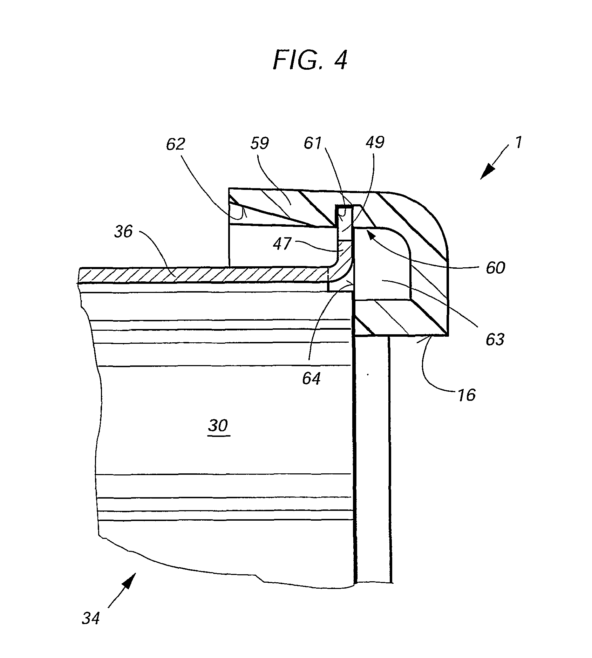

Der mit der Figur 4 dargestellte Teilschnitt und die Seitenansicht Figur 2 zeigen, dass ein an der Frontblende 1 angeformter umlaufender Rahmen 59 das Einbaugehäuseteil 2 relativ weit übergreift und auf diese Weise die Bereiche, wo sich die Verbindungsmittel zwischen der Frontblende 1 und dem Einbaugehäuseteil 2 befinden, unzugänglich abdeckt. Den Zungen 49, 50, 51, 52, 53 sowie den Lappen 54, 55 sind jeweils in dem Rahmen 59 ausgeformte Nute 60 zugeordnet, deren verriegelungswirksame Flanken 61 den Zungen und Lappen entsprechend in einer oder unterschiedlichen Ebenen liegen und im wesentlichen rechtwinklig zur Montagerichtung der Frontblende 1 ausgebildet sind. Mit 62 sind jeweils jeder Nut 60 zugeordnete Aufgleitflächen bezeichnet. Mehrere die Frontblende 1 versteifende Rippen 63 sind derart ausgebildet, dass ihre Stirnflächen 64 in der Frontebene der Leisten 47, 48, gegebenenfalls auch der Seitenwände 30, 31 liegen und bei der Montage der Frontblende 1 als Anschlag dienen. Es sei noch erwähnt, dass die Flanken 61 anders als rechtwinklig zur Montagerichtung der Frontblende 1 ausgebildet sein können, wobei im einen Falle die Demontage der Frontblende 1 erleichtert wäre im anderen Falle, d.h. bei hinterschnittenen Nuten 60, die Demontage erschwert und die Plombierfunktion verstärkt wären.

## Patentansprüche

1. Mittel zum Verbinden einer Frontblende (1) eines quaderförmigen Einbaugerätes mit dessen Einbaugehäuseteil (2), wobei die Frontblende (1) einer Schmalseite des Einbaugehäuseteils (2) zugeordnet ist und wobei das Einbaugerät ein Fahrtschreiber ist,
wobei an der Frontblende (1) ein umlaufender Rahmen (59) ausgebildet ist, dessen lichte Weite größer ist als die Einbaumaße des Einbaugehäuseteils (2) quer zur Einbaurichtung,
wobei wenigstens an zwei gegenüberliegenden Wandelementen (34, 35) des Einbaugehäuseteils (2) im wesentlichen rechtwinklig zur jeweiligen Wandebene nach außen weisende Zungen/Lappen (49, 50, 51, 52, 53)/(54, 55) angeformt sind,
wobei in dem Rahmen (59) den Zungen/Lappen (49, 50, 51, 52, 53)/(54, 55) zugeordnete Nuten (60) ausgebildet sind, deren verriegelungswirksame Flanken (61) im) wesentlichen rechtwinklig zur Montagerichtung der Frontblende (1) ausgebildet sind, und
wobei der Rahmen (59) Verbindungsmittel überdeckt und von außen nicht erkennbar ist, wo an der Innenseite des Rahmens (59) sich die Verbindungsmittel, das heißt die Zungen/Lappen (49, 50, 51, 52, 53)/(54, 55) und die den Zungen/Lappen (49, 50, 51, 52, 53)/(54, 55) zugeordneten Nuten (60), befinden.

2. Verbindungsmittel nach Anspruch 1,
**dadurch gekennzeichnet**
**dass** an den der Frontblende zugewandten Stirnseiten zweier gegenüberliegender Wandelemente (34, 35) des Einbaugehäuseteils (2) versteifende Leisten (47, 48) angeformt sind und
**dass** die Zungen (49, 50, 51, 52, 53) unmittelbar in der Ebene der Leisten (47, 48) ausgebildet sind.

3. Verbindungsmittel nach Anspruch1,
**dadurch gekennzeichnet,**
**dass** zwischen den Nuten (60) und der Stirnseite des Rahmens (59) den Zungen/ Lappen (49, 50, 51, 52,53) / (54, 55) zugeordnete Aufgleitflächen (62) vorgesehen sind.

4. Verbindungsmittel nach Anspruch 1,
**dadurch gekennzeichnet,**
**dass** die Zungen/ Lappen (49, 50, 51, 52,53) / (54, 55) an einem mehrteiligen, aus Stahlblech hergestellten Einbaugehäuseteil (2) ausgebildet sind und dass die den Zungen/ Lappen (49, 50, 51, 52,53) / (54, 55) zugeordneten Nute (60) in einer aus Kunststoff gefertigten Frontblende (1) ausgeformt sind.

5. Verbindungsmittel nach Anspruch 1,
**dadurch gekennzeichnet,**
**dass** die den Aufgleitflächen (62) zugewandten, verriegelungswirksamen Flanken (61) der Nute (60) im wesentlichen rechtwinklig zur Montagerichtung der Frontblende (1) ausgebildet sind.

## Claims

1. Means for connecting a front panel (1) of a parallelepipedal built-in unit to the built-in housing (2) of the latter, the front panel (1) being assigned to a narrow side of the built-in housing (2) and the built-in unit being a tachograph,
a peripheral frame (59) being formed on the front panel (1), and the clear width of this frame being greater than the installation dimensions of the built-in housing (2) in the direction transverse to the direction of installation,
outwardly oriented tongues/tabs (49, 50, 51, 52, 53)/(54, 55) being integrally formed at least on two opposite wall elements (34, 35) of the built-in housing (2) essentially at right angles to the respective wall plane,
grooves (60) assigned to the tongues/tabs (49, 50, 51, 52, 53)/(54, 55) being formed in the frame (59), the locking flanks (61) of the grooves being formed essentially at right angles to the direction of installation of the front panel (1), and
the frame (59) covering over connecting means and the location of the connecting means, i.e. the tongues/tabs (49, 50, 51, 52, 53)/(54, 55) and the grooves assigned to the tongues/tabs (49, 50, 51, 52, 53)/(54, 55) on the inside of the frame (59) not being visible from the outside.

2. Connecting means according to Claim 1, **characterized in that** stiffening strips (47, 48) are integrally formed on those end sides of two opposite wall elements (34, 35) of the built-in housing (2) which are directed toward the front panel, and **in that** the tongues (49, 50, 51, 52, 53) are formed directly in the plane of the strips (47, 48).

3. Connecting means according to Claim 1, **characterized in that** sliding surfaces (62) assigned to the tongues/tabs (49, 50, 51, 52, 53)/(54, 55) are provided between the grooves (60) and the end side of the frame (59).

4. Connecting means according to Claim 1, **characterized in that** the tongues/tabs (49, 50, 51, 52, 53)/(54, 55) are formed on a multi-part built-in housing (2) produced from sheet steel, and **in that** the grooves (60) assigned to the tongues/tabs (49, 50, 51, 52, 53)/(54, 55) are formed in a front panel (1) produced from plastic.

5. Connecting means according to Claim 1, **characterized in that** the locking flanks (61) of the grooves (60), said flanks being directed toward the sliding surfaces (62), are formed essentially at right angles to the direction of installation of the front panel (1).

## Revendications

1. Moyen permettant d'assembler un panneau avant (1) d'un appareil parallélépipède à encastrer avec le boîtier (2) à encastrer (2) lui correspondant, le panneau avant (1) correspondant à un côté étroit du boîtier (2) et l'appareil à encastrer étant un tachygraphe,
où, sur le panneau avant (1), est ménagé un cadre périphérique (59) dont l'ouverture intérieure est plus grande que les dimensions du boîtier à encastrer (2) perpendiculairement à la direction d'encastrement,
où, au moins sur deux éléments de paroi (34, 35) du boîtier (2) se faisant face sont façonnées, pour l'essentiel perpendiculairement au plan de la paroi respective, des languettes / pattes (49, 50, 51, 52, 53)/(54, 55) dirigées vers l'extérieur,
où des rainures (60) correspondant aux languettes/pattes (49, 50, 51, 52, 53)/(54, 55) sont ménagées dans le cadre (59), les flancs (61) utiles au verrouillage des dites rainures étant ménagés, pour l'essentiel, perpendiculairement à la direction de montage du panneau avant (1), et
où le cadre (59) recouvre des moyens de liaison et où il n'est pas possible de reconnaître de l'extérieur où se trouvent les moyens de liaison sur le côté intérieur du cadre (59), c'est-à-dire où se trouvent les languettes/pattes (49, 50, 51, 52, 53)/(54, 55) et les rainures (60) correspondant aux languettes/ pattes (49, 50, 51, 52, 53)/(54, 55).

2. Moyen d'assemblage selon la revendication 1,
**caractérisé par le fait**
**que**, sur les faces de tranche, tournées vers le panneau avant, de deux éléments de paroi (34, 35) du boîtier (2) se faisant face, sont façonnées des barrettes de renforcement (47, 48) et que les languettes/pattes (49, 50, 51, 52, 53) sont ménagées directement dans le plan des barrettes (47, 48).

3. Moyen d'assemblage selon la revendication 1,
**caractérisé par le fait**
**que**, entre les rainures (60) et la face de tranche du cadre (59), il est prévu des surfaces de glissement (62) correspondant aux languettes/pattes (49, 50, 51, 52, 53)/(54, 55).

4. Moyen d'assemblage selon la revendication 1,
**caractérisé par le fait**
**que** les languettes/pattes (49, 50, 51, 52, 53)/(54, 55) sont ménagées sur un boîtier (2) fabriqué en plusieurs parties en tôle d'acier et
**que** les rainures (60) correspondant aux languettes/pattes (49, 50, 51, 52, 53)/(54, 55) sont façonnées dans un panneau avant (1) fabriqué en matière plastique.

5. Moyen d'assemblage selon la revendication 1,
**caractérisé par le fait**
**que** les flancs (61), utiles au verrouillage, de la rainure (60), tournés vers les surfaces de glissement (62), sont ménagés, pour l'essentiel, perpendiculairement à la direction de montage du panneau avant (1).
